# FASCICULE DE BREVET EUROPEEN

(11) **EP 3 712 838 B1**
(45) Date de publication et mention de la délivrance du brevet: **13.09.2023**
(21) Numéro de dépôt: 20162648.8
(22) Date de dépôt: 12.03.2020
(51) Int. Cl.: G06T 1/20

(54) **DISPOSITIF ÉLECTRONIQUE DE TRAITEMENT D'IMAGES**
ELEKTRONISCHE VORRICHTUNG ZUR BILDVERARBEITUNG
ELECTRONIC DEVICE FOR PROCESSING IMAGES

(30) Priorité: 22.03.2019 FR 1902966
(43) Date de publication de la demande: 23.09.2020
(73) Titulaire: STMicroelectronics (Grenoble 2) SAS, 38000 Grenoble (FR); STMicroelectronics (Rousset) SAS, 13790 Rousset (FR)
(72) Inventeur: PINATEL, Christophe, 83136 GAREOULT (FR); MAZER, Serge, 38430 ST JEAN DE MOIRANS (FR); FERRAND, Olivier, 13620 CARRY LE ROUET (FR)
(74) Mandataire: Casalonga

(56) Documents cités:
- US-A1- 2016 283 801
- JAMES HEGARTY ET AL: "Darkroom: Compiling High-Level Image Processing Code into Hardware Pipeliness", ACM TRANSACTIONS ON GRAPHICS, ACM, 2 PENN PLAZA, SUITE 701NEW YORKNY10121-0701USA, vol. 33, no. 4, 27 juillet 2014 (2014-07-27), pages 1-11, XP058051988, ISSN: 0730-0301, DOI: 10.1145/2601097.2601174
- JOHANNES KNEIP ET AL: "Single-chip highly parallel architecture for image processing applications", PROCEEDINGS OF SPIE, vol. 2308, 16 septembre 1994 (1994-09-16), pages 1753-1764, XP055645168, 1000 20th St. Bellingham WA 98225-6705 USA ISSN: 0277-786X, DOI: 10.1117/12.185932 ISBN: 978-1-5106-2687-4

## Description

Des modes de réalisation de l'invention concernent les dispositifs électroniques, plus particulièrement les dispositifs électroniques pour traitement d'images comportant des chaînes de traitement ou plus communément appelés des pipelines (« pipeline » en langue anglaise).

D'une façon générale, un dispositif électronique de traitement d'images comporte plusieurs pipelines destinés à recevoir un flux de données d'images émanant d'un appareil de capture d'images tel qu'une caméra.

En fonction d'applications envisagées, plusieurs pipelines sont généralement nécessaires pour traiter des données d'images de façon à les adapter pour des traitements ultérieurs, par exemple effectuer des redimensionnements et des recadrages des données d'images pour des affichages écrans, des analyses statiques d'images brutes sous format de fichier « RAW », ou des enregistrements d'images de qualité élevée et de haute définition.

Grâce à des puissances de calcul de plus en plus importantes associées à des caméras notamment susceptibles d'être intégrées dans des appareils électroniques mobiles tels que des téléphones intelligents (« Smart Phone » en langue anglaise), il devient désormais possible d'appliquer des algorithmes d'intelligence artificielle (« Artificial Intelligent » AI : en langue anglaise) en temps réel sur des données d'images émanant desdites caméras.

Pour ce faire, plusieurs pipelines sont classiquement utilisés en parallèle pour générer des données d'images adaptées de façon à les délivrer à un ou des réseaux de neurones artificiels configurés pour, par exemple, identifier des zones d'intérêt (« Région Of Interest » en langue anglaise) dans ces données d'images.

Cependant, de tels traitements sont généralement basés sur une image de qualité élevée enregistrée dans une mémoire externe située à l'extérieur dudit dispositif électronique car l'image enregistrée est généralement trop grande pour être stockée localement.

Plusieurs pipelines sont configurés pour effectuer respectivement des prétraitements (« pre-processing » en langue anglaise) distincts intermédiaires tels que
des prétraitements de ladite image enregistrée pour générer une nouvelle image de basse résolution adaptée à des traitements dits intelligents artificiels, par exemple des traitements d'identification d'une ou de plusieurs zones d'intérêt,
des prétraitements de la ou des zones d'intérêt identifiées pour des traitements de reconnaissance d'objets dans la ou les zones d'intérêt identifiées, et
des prétraitements de ladite image enregistrée pour afficher ladite image enregistrée et/ou les zones d'intérêt identifiées en basse définition. Des exemples on trouve dans JAMES HEGARTY ET AL: "Darkroom: Compiling High-Level Image Processing Code into Hardware Pipeliness" ou bien dans JOHANNES KNEIP ET AL: "Single-chip highly parallel architecture for image processing applications".

Néanmoins, ces prétraitements distincts intermédiaires exigent des mémoires de tampon intermédiaires supplémentaires et demandent des bandes passantes importantes entre le dispositif électronique et la mémoire externe, qui conduit généralement à un coût très élevé notamment au niveau de la surface silicium occupée et de la consommation énergétique.

De surcroît, comme certains prétraitements dépendent directement de résultats de sortie d'autres prétraitements, il y a un risque de cumul des latences propagées parmi tous ces prétraitements.

Il existe ainsi un besoin de proposer une solution technique à faible complexité, à faible surface silicium ainsi qu'à faible consommation d'énergie permettant de réaliser, quasiment en temps réel, des prétraitements et des traitements d'images sans aucune mémoire tampon intermédiaire.

Selon un aspect, il est ainsi proposé un dispositif électronique de traitement d'images.

Le dispositif électronique comprend
au moins un pipeline, chaque pipeline étant destiné à traiter des trames de données d'images au rythme d'un débit de trame (« frame rate » en langue anglaise),
une mémoire interne comportant pour chaque pipeline un jeu de descripteurs disposés selon un ordre, chaque descripteur comportant des informations relatives à une fonction destinée à être activée par le pipeline correspondant sur au moins une trame de données d'image, les fonctions associées aux différents descripteurs étant différentes, et des moyens de commande configurés pour, pour chaque pipeline,
lire le jeu de descripteurs correspondant de façon séquentielle et répétitive dans ledit ordre au rythme d'un des descripteurs par trame de données d'images et mémoriser les informations correspondant au descripteur lu,
chaque pipeline étant configuré pour activer sur chaque trame de données d'images la fonction correspondant aux informations mémorisées.

Chaque pipeline du dispositif électronique est avantageusement configuré pour activer une fonction correspondant aux informations d'un des descripteurs par trame de données d'images selon ledit ordre. Comme les informations des descripteurs sont différentes, les fonctions correspondantes sont aussi différentes.

Autrement dit, chaque pipeline est configuré pour activer de façon séquentielle et cyclique les différentes fonctions au rythme dudit débit de trame.

La lecture séquentielle et cyclique du jeu de descripteurs s'effectue au rythme d'un descripteur par au moins une trame de données.

En effet on peut avoir un descripteur par trame ou bien un descripteur valable pour plusieurs trames (le nombre de trames pouvant être programmé par l'utilisateur à l'intérieur du descripteur).

Autrement dit, dans le cas où l'on a un descripteur par trame, pour une trame de données courante, on lit un descripteur. Puis pour la trame de données suivante, on lit le descripteur suivant compte tenu de l'ordre. Et ainsi de suite jusqu'à la lecture du dernier descripteur du jeu de descripteurs.

Dans le cas où un descripteur est valable pour plusieurs trames, on attend le nombre de trames correspondant avant de lire le descripteur suivant compte tenu de l'ordre.

Une fois que les informations du dernier descripteur dudit jeu selon l'ordre sont lues, les moyens de commande sont configurés pour lire, pour la prochaine trame de données d'images, les informations du premier descripteur dudit jeu de descripteur selon l'ordre et répéter le cycle.

De ce fait, chaque pipeline crée ainsi plusieurs pipelines « virtuels » fonctionnant en mode de multiplexage temporel au rythme du débit de trame.

Avantageusement, un seul pipeline peut déjà être suffisant pour traiter toutes les trames de données d'images et aucune mémoire tampon intermédiaire n'est nécessaire, ce qui réduit considérablement le coût de fabrication, la surface silicium occupée et la consommation énergétique dudit dispositif électronique.

Il convient de noter qu'il est également possible d'utiliser un nombre quelconque de pipelines physiques pour créer un nombre quelconque de pipelines « virtuels » en fonction de la performance escomptée.

De surcroît, le fait que les pipelines « virtuels » peuvent fonctionner de façon indépendante en mode multiplexage temporel permet d'éviter d'éventuelles latences liées aux prétraitements dépendants décrits ci-avant.

Selon un mode de réalisation, les moyens de commande comportent en outre pour chaque pipeline une mémoire de recopie et un registre.

Les moyens de commande sont en outre configurés pour, pour chaque pipeline,
lire, entre la fin de la trame de données d'images précédente et la fin de la trame de données d'images actuelle, un des descripteurs et mémoriser ensuite les informations correspondantes dans la mémoire de recopie, et
transférer les informations mémorisées de la mémoire de recopie au registre dès la fin de la trame de données d'images actuelle.

Le pipeline correspondant est configuré pour activer la fonction correspondant aux informations mémorisées dans le registre dès le début de la prochaine trame de données d'images.

Une telle utilisation de la mémoire de recopie permet avantageusement de charger de façon asynchrone, à la suite de la fin de la trame de données d'images précédente mais avant la fin de la trame de données d'images actuelle, les informations du prochain descripteur suivant ledit ordre.

Comme le transfert de données entre la mémoire de recopie et le registre est intrinsèquement rapide, les informations du prochain descripteur selon l'ordre sont avantageusement transférées au registre dès la fin de la trame de données d'images actuelle de façon à permettre d'assurer l'activation synchrone de la fonction correspondante par le pipeline correspondant dès le début de la prochaine trame de données d'images.

Par conséquent, tous les traitements des trames de données d'images peuvent avantageusement être réalisés à la volée sans exiger des mémoires intermédiaires car des trames de données d'images peuvent directement être taillées à des dimensions et/ou à des résolutions souhaitées pour des traitements ultérieurs.

Selon un mode de réalisation, les moyens de commande comprennent un contrôleur du type d'accès direct à la mémoire (« Direct Memory Access » : DMA en langue anglaise).

Avantageusement, aucun processeur (« central processing unit » : CPU en langue anglaise) ou aucune intervention d'utilisateur n'est nécessaire car toutes les fonctions à activer dans les trames de données d'images sont enregistrées sous formes d'informations dans le jeu de descripteurs disposés selon ledit ordre.

Et aucun processeur n'est nécessaire pour reconfigurer le pipeline ni pour transférer les données dans le cadre de l'utilisation d'un système DMA.

Selon encore un autre mode de réalisation, le contrôleur du type d'accès direct à la mémoire est un contrôleur intégré dédié audit au moins un pipeline.

Un tel mode de réalisation permet encore d'économiser la surface silicium occupée du dispositif électronique.

A titre d'exemple mais non limitatif, le débit de trame peut par exemple être configurable.

En d'autres termes, un utilisateur dudit dispositif électronique peut avantageusement régler le débit de trame pour obtenir une performance souhaitée du dispositif électronique en fonction d'applications envisagées.

En outre, le nombre de descripteurs de chaque jeu de descripteurs et ledit ordre peuvent par exemple aussi être configurables.

Il convient de noter que non seulement la position relative de chaque descripteur mais également le nombre de répétitions de chaque descripteur dans chaque jeu de descripteurs disposés selon l'ordre sont configurables afin de permettre des possibilités de créer une combinaison quelconque des fonctions de pipeline.

A titre indicatif mais non limitatif, le dispositif électronique comporte en outre des moyens de traitement basés sur un ou des réseaux de neurones artificiels couplés audit au moins un pipeline.

Ces moyens de traitement permettent par exemple d'identifier des zones d'intérêt et de reconnaître d'éventuels objets apparus dans ces zones d'intérêt, notamment pour des applications de l'intelligence artificielle (« Artificial Intelligence » : AI en langue anglaise).

Le dispositif électronique peut par exemple comporter en outre un contrôleur d'affichage couplé audit au moins un pipeline.

Selon un autre aspect, il est proposé un appareil électronique comportant un dispositif électronique tel que défini ci-avant, une caméra configurée pour délivrer audit au moins un pipeline les trames de données d'images.

Selon un mode de réalisation, l'appareil électronique comporte en outre des moyens d'affichage couplés au contrôleur d'affichage du dispositif électronique.

D'autres avantages et caractéristiques de l'invention apparaîtront à l'examen de la description détaillée de modes de réalisation, nullement limitatifs, et des dessins annexés sur lesquels :
[fig.1] illustre schématiquement un mode de réalisation de l'invention.
[fig.2] illustre schématiquement un mode de réalisation de l'invention.
[fig.3] illustre schématiquement un mode de réalisation de l'invention.
[fig.4] illustre schématiquement un mode de réalisation de l'invention.
[fig.5] illustre schématiquement un mode de mise en oeuvre et de réalisation de l'invention.

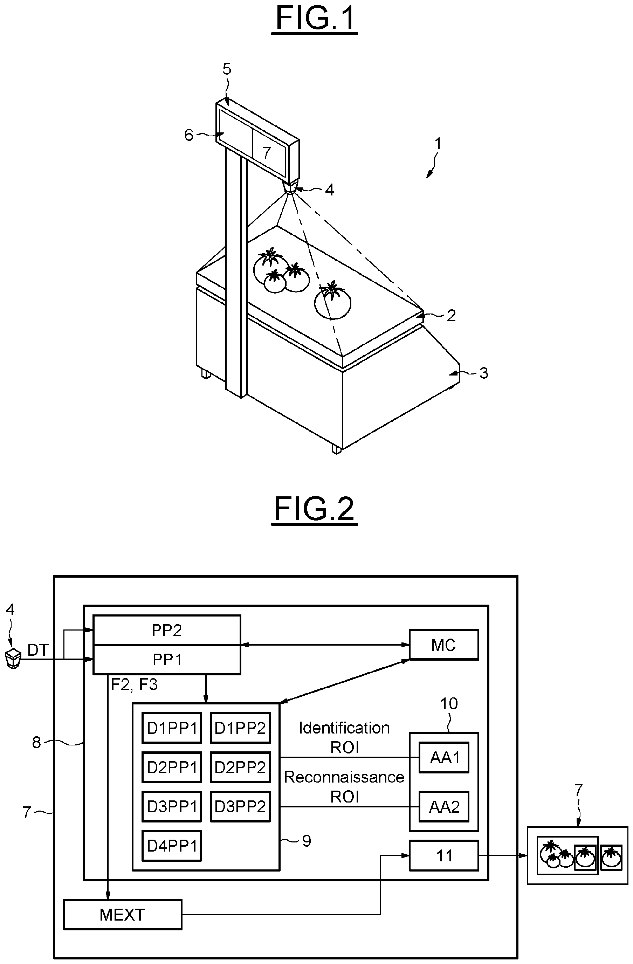

La référence 1 sur la figure 1 désigne un appareil électronique tel qu'une balance intelligente (« Smart Balance » en langue anglaise) pour les commerces.

La balance intelligente 1 comporte
un plateau de balance 2 destiné à recevoir des produits à peser, par exemple des fruits tels que des tomates,
des moyens de mesure 3 configurés pour déterminer le poids des produits déposés sur le plateau de balance 2
une caméra 4 dont le champ de vision couvre le plateau de balance 2, des moyens d'affichage 5 comportant au moins un écran, ici par exemple un écran 6, et
un système de traitement 7 couplé entre la caméra 4 et les moyens d'affichage 5 et configuré pour traiter des données d'images générées par la caméra 4 de façon à délivrer des images adaptées pour les moyens d'affichage 5.

On se réfère maintenant à la figure 2 pour illustrer plus en détails un exemple de mode de réalisation du système de traitement 7.

Le système de traitement 7 comprend un dispositif électronique 8, ici par exemple un microcontrôleur 32-bits et des mémoires externes MEXT, par exemple du type mémoire vive statique (« Static Random Access Memory » : SRAM en langue anglaise).

Le dispositif électronique 8 comprend
au moins un pipeline, autrement dit chaîne de traitement, ici par exemple un premier pipeline PP1 et un deuxième pipeline PP2,
une mémoire interne 9, ici par exemple également du type mémoire vive statique, comportant pour chaque pipeline PP1, PP2 un jeu de descripteurs, ici par exemple quatre descripteurs D1PP1, D2PP1, D3PP1, D4PP1 pour le premier pipeline PP1 et trois descripteurs D1PP2, D2PP2, D3PP2 pour le deuxième pipeline PP2, et
des moyens de commande MC, ici par exemple un contrôleur du type d'accès direct à la mémoire (« Direct Memory Access » : DMA en langue anglaise) couplés audit au moins un pipeline PP1, PP2 et configuré pour contrôler des fonctionnements dudit au moins un pipeline PP1, PP2.

A titre d'exemple, ce contrôleur DMA peut également être un contrôleur DMA intégré dédié audit au moins un pipeline du dispositif électronique 8.

Chaque pipeline PP1, PP2 est configuré pour recevoir, au rythme d'un débit de trame DT, des trames de données d'images à traiter. Les trames de données d'images émanent de la caméra 4.

Ledit débit de trame DT est configurable de façon à permettre d'ajuster une durée allouée au traitement de chaque trame de données d'images.

Il convient de noter que, dans certains cas, l'utilisation d'un seul pipeline PP1 peut déjà être adéquate pour les traitements des trames de données d'images.

On illustre ici les premier et deuxième pipelines PP1, PP2 afin de montrer que les moyens de commande MC peuvent être configurés pour contrôler en parallèle les premier et deuxième pipelines PP1, PP2 de façon à créer respectivement des pipelines « virtuels » au sein des premier et deuxième pipelines PP1, PP2 pour renforcer la performance des traitements des trames de données d'images.

Le dispositif électronique 8 comprend en outre des moyens de traitement 10 couplés aux premier et deuxième pipelines PP1, PP2 via la mémoire interne 9.

Les moyens de traitement 10 sont par exemple implémentés ici sous forme d'un accélérateur de réseaux de neurones artificiels (« Artificial Neuron Network Accelerator » en langue anglaise) connu de l'homme du métier.

Les moyens de traitement 10 sont configurés pour
identifier éventuellement une ou des zones d'intérêt ROI (« Région Of Interest » : ROI en langue anglaise) dans chaque trame de données d'images à traiter en utilisant un premier algorithme d'apprentissage AA1, et
reconnaître des objets apparus dans la ou les zones d'intérêt identifiées en utilisant un deuxième algorithme d'apprentissage AA2.

Il convient de noter que les premier et deuxième algorithmes d'apprentissage peuvent être identiques ou différents.

Tous les types de réseaux de neurones artificiels connus tels que les réseaux de neurone à convolution dits « AlexNet » et « ConvNet » peuvent être implémentés dans les moyens de traitement 10 de façon à améliorer la performance du dispositif électronique 8.

Le dispositif électronique 8 comprend en outre un contrôleur d'affichage 11 couplé aux premier et deuxième pipelines PP1, PP2 via les mémoires externes MEXT.

Le contrôleur d'affichage 11 est configuré pour recevoir des données d'images de prévision émanant des premier et deuxième pipelines PP1, PP2 via les mémoires externes MEXT et les délivrer auxdits moyens d'affichage 5 pour visualiser une ou des images de prévision sur les moyens d'affichage 5.

Il convient de noter que chaque pipeline PP1, PP2 peut avoir autant de descripteurs correspondants que nécessaire. Ces descripteurs correspondants sont enregistrés dans la mémoire interne 9.

Autrement dit, le nombre de descripteurs de chaque jeu de descripteurs D1PP1, D2PP1, D3PP1, D4PP1, D1PP2, D2PP2, D3PP2 pour chaque pipeline PP1, PP2 n'est pas limité.

Les informations de chaque descripteur sont relatives à une fonction de pipeline destinée à être activée sur une trame de données d'images. De ce fait, chaque pipeline PP1, PP2 peut créer autant de pipelines dits « virtuels » que de descripteurs correspondants.

Dans l'exemple illustré sur la figure 2, les quatre descripteurs D1PP1, D2PP1, D3PP1, D4PP1 du premier pipeline PP1 correspondent à quatre pipelines virtuels PV1, PV2, PV3, PV4 créés par le premier pipeline PP1.

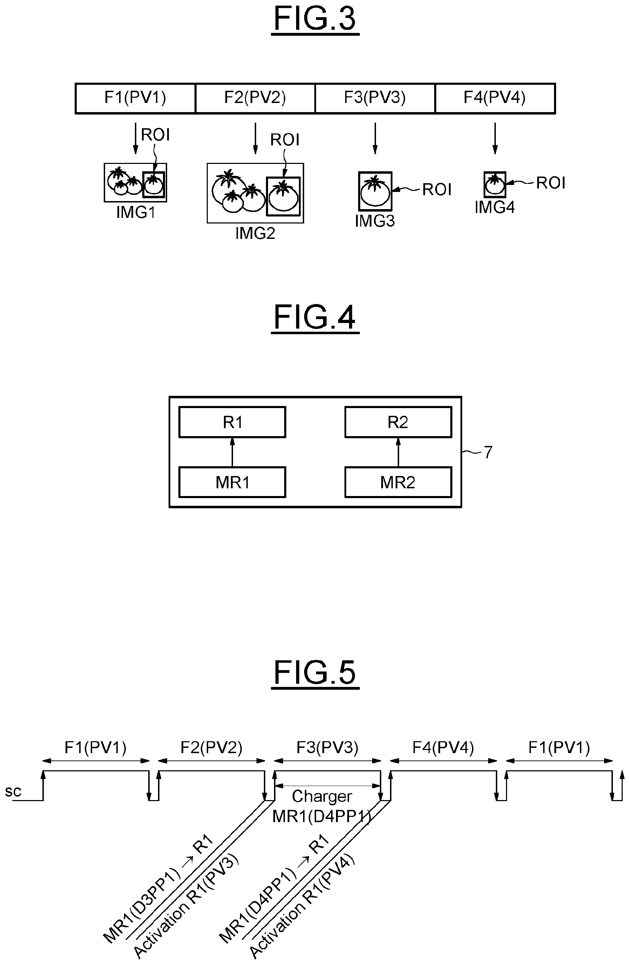

On se réfère maintenant à la figure 3 pour illustrer un exemple de fonctionnement de ces quatre pipelines virtuels PV1, PV2, PV3, PV4.

Sous contrôle des moyens de commande MC, le premier pipeline PP1 est configuré pour créer le premier pipeline virtuel PV1 dans lequel on effectue des redimensionnements et/ou des recadrages de données d'images d'une première trame F1 de façon à délivrer à la mémoire interne 9 une première image IMG1 de basse définition, par exemple de 220 pixels X 220 pixels, comme illustrée sur la figure 3.

Cette première image IMG1 est de basse définition afin de pourvoir être stockée dans la mémoire interne 9 et de faciliter des traitements ultérieurs d'identification de zones d'intérêt.

A titre d'exemple, cette première image IMG1 peut par exemple être une image contenant quatre tomates sur le plateau de balance 2.

Les moyens de commande MC sont ensuite configurés pour délivrer cette première image IMG1 aux moyens de traitement 10.

Les moyens de traitement 10 sont configurés pour appliquer un ou des algorithmes de reconnaissance de réseaux de neurones adaptés pour identifier une ou des zones d'intérêt ROI dans ladite première image IMG1, ici par exemple une zone ROI carrée autour d'une tomate sur ladite première image IMG1.

Les moyens de traitement 10 sont en outre configurés pour créer le deuxième pipeline virtuel PV2 dans lequel on effectue des recadrages de données d'images d'une deuxième trame F2 de façon à délivrer à la mémoire interne 9 une deuxième image IMG2 de haute définition.

En supposant que les tomates sur le plateau de balance 2 sont statiques, la deuxième image IMG2 peut être une version haute résolution de la première image IMG1.

Les moyens de commande MC sont configurés pour créer le troisième pipeline virtuel PV3 dans lequel on effectue des redimensionnements et des recadrages de données d'images d'une troisième trame F3 de façon à délivrer à la mémoire externe MEXT une troisième image IMG3 de haute définition correspondant à la zone d'intérêt ROI identifiée par les moyens de traitement 10.

Il convient de noter que les informations du troisième descripteur du premier pipeline PP1 peuvent par exemple être modifiées ici à la volée en tenant compte des résultats de l'identification de la zone d'intérêt réalisée par les moyens de traitement 10.

Les moyens de commande MC sont configurés pour délivrer ces deuxième et troisième images IMG2 et IMG3 aux moyens d'affichage 5 via la mémoire externe MEXT et le contrôleur d'affichage 11.

Comme illustré sur la figure 2, ces images IMG2 et IMG3 sont séparément illustrées sur l'écran 6.

Une fois la zone d'intérêt ROI identifiée, les moyens de commande MC sont en outre configurés pour créer le quatrième pipeline virtuel PV4 dans lequel on effectue des redimensionnements et des recadrages de données d'images d'une quatrième trame F4 de façon à délivrer aux moyens de traitement 11 via la mémoire interne 9 une quatrième image IMG4 de basse définition correspondant à la zone d'intérêt ROI identifiée par les moyens de traitement 10.

Ces moyens de traitement 10 sont ensuite configurés pour reconnaître un ou des objets apparus dans la quatrième image IMG4 à l'aide des algorithmes de reconnaissance de réseaux de neurones artificiels.

Ainsi, une tomate est reconnue dans la quatrième image IMG4 et les moyens de commande MC sont configurés pour faire afficher le prix unitaire de la tomate sur les moyens d'affichage 11 et éventuellement le prix total en prenant en compte le poids des tomates mesuré par les moyens de mesure 3.

On se réfère maintenant à la figure 4 pour illustrer un exemple de mode de réalisation des moyens de commande MC selon l'invention.

Afin de lire et mémoriser les informations des descripteurs correspondants de chaque pipeline PP1, PP2, les moyens de commande MC comportent en outre
une première mémoire de recopie MR1 et un premier registre R1 pour le premier pipeline PP1, et
une deuxième mémoire de recopie MR2 et un deuxième registre R2 pour le deuxième pipeline PP2.

Les première et deuxième mémoires de recopie MR1, MR2 sont communément connues de l'homme du métier sous terme anglo-saxon « Shadow Memory ou Shadow Register » en langue anglaise.

Comme son nom l'indique, les première et deuxième mémoires de recopie MR1, MR2 sont configurées pour suivre les premier et deuxième registres R1, R2 au sujet de données stockées.

En effet, la latence de transfert de données entre la première ou deuxième mémoire de recopie MR1 ou MR2 et le premier ou deuxième registre R1 ou R2 correspondant est très courte, par exemple dans l'ordre de quelques microsecondes.

La figure 5 illustre en diagramme de temps un signal de contrôle SC destiné à être utilisé pour contrôler le fonctionnement des première et deuxième mémoires de recopie MR1, MR2 et des premier et deuxième registres R1, R2.

On suppose dans cet exemple qu'un descripteur ou pipeline virtuel est valable pour une seule trame.

A des fins de simplifications, on n'illustre ici que le fonctionnement de la première mémoire de recopie MR1 et du premier registre R1 correspondant au premier pipeline PP1.

Comme on peut observer sur la figure 5, le premier pipeline PP1 est destiné à recevoir un signal de contrôle SC.

Chaque front descendant du signal de contrôle SC marque la fin d'une trame de donnée d'image et chaque front montant du signal de contrôle SC correspond au début d'une trame de donnée d'image.

Par conséquent, on peut constater sur la figure 5 que les quatre trames F1, F2, F3, F4 de données d'images correspondent aux quatre pipelines virtuels PV1, PV2, PV3, PV4 du premier pipeline PP1.

Supposons que l'on soit actuellement au traitement de la troisième trame F3, les moyens de commande MC sont configurés pour, pour le premier pipeline PP1, lire entre la fin de la trame de données d'images précédente F2 et la fin de la trame de données d'images actuelle F3, les informations d'un des descripteurs dans la première mémoire de recopie MR1.

Selon le premier ordre ORD1 illustré sur la figure 4, le premier pipeline PP1 est configuré pour créer le quatrième pipeline virtuel PV4 dès le début de la quatrième trame F4. En conséquent, ce sont les informations du quatrième descripteur D4PP1 qui doivent être lues et mémorisées dans la première mémoire de recopie MR1 entre la fin de la trame de données d'images précédente F2 et la fin de la trame de données d'images actuelle F3.

Les moyens de commande MC sont en outre configurés pour transférer les informations du quatrième descripteur D4PP1 dans le premier registre R1 dès la fin de la troisième trame de données d'images F3.

Enfin, le pipeline correspondant, ici le premier pipeline PP1 est configuré pour activer la fonction correspondant aux informations du quatrième descripteur D4PP1, autrement dit le quatrième pipeline virtuel PV4, dès le début de la quatrième trame F4.

De ce fait, un seul pipeline peut réaliser des fonctions différentes au rythme d'un débit de trame. En d'autres termes, plusieurs pipelines virtuels peuvent être créés en utilisant un seul pipeline.

## Revendications

1. Dispositif électronique de traitement d'images, comprenant au moins un pipeline (PP1, PP2), chaque pipeline (PP1, PP2) étant destiné à traiter des trames de données d'images au rythme d'un débit de trame (DT),
une mémoire interne (9) comportant pour chaque pipeline (PP1, PP2) un jeu de descripteurs (D1PP1, D2PP1, D3PP1, D4PP1, D1PP2, D2PP2, D3PP2) disposés selon un ordre (ORD1, ORD2), chaque descripteur (D1PP1, D2PP1, D3PP1, D4PP1, D1PP2, D2PP2, D3PP2) comportant des informations relatives à une fonction (PV1, PV2, PV3, PV4) destinée à être activée par le pipeline correspondant sur au moins une trame de données d'images, les fonctions associées aux différents descripteurs étant différentes, et
des moyens de commande (MC) configurés pour, pour chaque pipeline (PP1, PP2), lire le jeu de descripteurs (D1PP1, D2PP1, D3PP1, D4PP1, D1PP2, D2PP2, D3PP2) correspondant de façon séquentielle et cyclique selon ledit ordre (ORD1, ORD2) au rythme d'un descripteur par au moins une trame de données d'images (F1, F2, F3, F4) et mémoriser les informations correspondant au descripteur lu,
chaque pipeline (PP1, PP2) étant configuré pour activer sur chaque trame de données d'images (F1, F2, F3, F4) la fonction (PV1, PV2, PV3, PV4) correspondant aux informations mémorisées.

2. Dispositif selon la revendication 1, dans lequel les moyens de commande (MC) comportent pour chaque pipeline (PP1, PP2) une mémoire de recopie (MR1, MR2) et un registre (R1, R2), et sont en outre configurés pour, pour chaque pipeline (PP1, PP2),
lire, entre la fin de la trame de données d'images précédente (F2) et la fin de la trame de données d'images actuelle (F3), un des descripteurs (D4PP1) et mémoriser ensuite les informations correspondantes dans la mémoire de recopie (MR1), et
transférer les informations mémorisées de la mémoire de recopie (MR1) au registre (R1) dès la fin de la trame de données d'images actuelle (F3),
le pipeline (PP1, PP2) correspondant étant configuré pour activer la fonction correspondant aux informations mémorisées dans le registre (R1) dès le début de la prochaine trame de données d'images (F4).

3. Dispositif selon la revendication 1 ou 2, dans lequel les moyens de commande (MC) comprennent un contrôleur du type d'accès direct à la mémoire.

4. Dispositif selon la revendication 3, dans lequel le contrôleur du type d'accès direct à la mémoire est un contrôleur intégré dédié audit au moins un pipeline.

5. Dispositif selon l'une quelconque des revendications précédentes, dans lequel le débit de trame (DT) est configurable.

6. Dispositif selon l'une quelconque des revendications précédentes, dans lequel le nombre de descripteurs de chaque jeu de descripteurs (D1PP1, D2PP1, D3PP1, D4PP1, D1PP2, D2PP2, D3PP2) et ledit ordre (ORD1, ORD2) sont configurables.

7. Dispositif selon l'une quelconque des revendications précédentes, comportant en outre des moyens de traitement (10) basés sur un ou des réseaux de neurones artificiels couplés audit au moins un pipeline (PP1, PP2).

8. Dispositif selon l'une quelconque des revendications précédentes, comportant en outre un contrôleur d'affichage (11) couplé audit au moins un pipeline (PP1, PP2).

9. Appareil électronique comportant un dispositif électronique selon l'une quelconque des revendications précédentes, une caméra (4) configurée pour délivrer audit au moins un pipeline (PP1, PP2) les trames de données d'images (F1, F2, F3, F4).

10. Appareil selon les revendications 8 et 9, comportant en outre des moyens d'affichage (5) couplés au contrôleur d'affichage (11) du dispositif électronique (8).

## Patentansprüche

1. Elektronische Vorrichtung zur Bildverarbeitung, die mindestens eine Pipeline (PP1, PP2) umfasst, wobei jede Pipeline (PP1, PP2) dazu bestimmt ist, Rahmen von Bilddaten im Rhythmus einer Rahmenrate (DT) zu verarbeiten,
einen internen Speicher (9), der für jede Pipeline (PP1, PP2) einen Satz von Deskriptoren (D1PP1, D2PP1, D3PP1, D4PP1, D1PP2, D2PP2, D3PP2) enthält, die in einer Reihenfolge (ORD1, ORD2) angeordnet sind, wobei jeder Deskriptor (D1PP1, D2PP1, D3PP1, D4PP1, D1PP2, D2PP2, D3PP2) Informationen über eine Funktion (PV1, PV2, PV3, PV4) enthält, die dazu bestimmt ist, von der entsprechenden Pipeline auf mindestens einem Rahmen von Bilddaten aktiviert zu werden, wobei die den verschiedenen Deskriptoren zugeordneten Funktionen unterschiedlich sind, und
Mittel zur Steuerung (MC), die so konfiguriert sind, dass sie für jede Pipeline (PP1, PP2) den entsprechenden Satz von Deskriptoren (D1PP1, D2PP1, D3PP1, D4PP1, D1PP2, D2PP2, D3PP2) sequentiell und zyklisch gemäß der Reihenfolge (ORD1, ORD2) im Rhythmus eines Deskriptors durch mindestens einen Rahmen von Bilddaten (F1, F2, F3, F4) lesen und die dem gelesenen Deskriptor entsprechenden Informationen speichern, wobei jede Pipeline (PP1, PP2) so konfiguriert ist, dass sie auf jedem Rahmen von Bilddaten (F1, F2, F3, F4) die Funktion (PV1, PV2, PV3, PV4) aktiviert, die den gespeicherten Informationen entspricht.

2. Vorrichtung nach Anspruch 1, wobei die Mittel zur Steuerung (MC) für jede Pipeline (PP1, PP2) einen Kopierspeicher (MR1, MR2) und ein Register (R1, R2) umfassen und ferner so konfiguriert sind, dass sie für jede Pipeline (PP1, PP2),
zwischen dem Ende des vorherigen Rahmens von Bilddaten (F2) und dem Ende des aktuellen Rahmens von Bilddaten (F3) einen der Deskriptoren (D4PP1) lesen und dann die entsprechenden Informationen in dem Kopierspeicher (MR1) speichern, und die gespeicherten Informationen aus dem Kopierspeicher (MR1) in das Register (R1) übertragen, sobald der aktuelle Rahmen von Bilddaten (F3) beendet ist,
wobei die entsprechende Pipeline (PP1, PP2)so konfiguriert ist, dass sie die Funktion, die den im Register (R1) gespeicherten Informationen entspricht, ab dem Beginn des nächsten Rahmens von Bilddaten (F4) aktiviert.

3. Vorrichtung nach Anspruch 1 oder 2, bei der die Mittel zur Steuerung (MC) eine Steuerung vom Typ des direkten Speicherzugriffs umfassen.

4. Vorrichtung nach Anspruch 3, wobei die Steuerung des Typs des direkten Speicherzugriffs eine integrierte Steuerung ist, die der mindestens einen Pipeline gewidmet ist.

5. Vorrichtung nach einem der vorhergehenden Ansprüche, wobei die Rahmenrate (DT) konfigurierbar ist.

6. Vorrichtung nach einem der vorhergehenden Ansprüche, wobei die Anzahl der Deskriptoren in jedem Satz von Deskriptoren (D1PP1, D2PP1, D3PP1, D4PP1, D1PP2, D2PP2, D3PP2) und die Reihenfolge (ORD1, ORD2) konfigurierbar sind.

7. Vorrichtung nach einem der vorhergehenden Ansprüche, die ferner Mittel zur Verarbeitung (10) umfasst, die auf einem oder mehreren künstlichen neuronalen Netzen basieren, die mit der mindestens einen Pipeline (PP1, PP2) gekoppelt sind.

8. Vorrichtung nach einem der vorhergehenden Ansprüche, die ferner eine Anzeigesteuerung (11) umfasst, die mit der mindestens einen Pipeline (PP1, PP2) gekoppelt ist.

9. Elektronisches Gerät mit einer elektronischen Vorrichtung nach einem der vorhergehenden Ansprüche, einer Kamera (4), die so konfiguriert ist, dass sie die Rahmen von Bilddaten (F1, F2, F3, F4) an die mindestens eine Pipeline (PP1, PP2) ausliefert.

10. Gerät nach den Ansprüchen 8 und 9, das ferner Mittel zur Anzeige (5) umfasst, die mit der Anzeigesteuerung (11) des elektronischen Geräts (8) gekoppelt sind.

## Claims

1. Electronic device for processing images, comprising at least one pipeline (PP1, PP2), each pipeline (PP1, PP2) being intended to process frames of data of images at the pace of a frame rate (DT),
an internal memory (9) including for each pipeline (PP1, PP2) a set of descriptors (D1PP1, D2PP1, D3PP1, D4PP1, D1PP2, D2PP2, D3PP2) disposed according to an order (ORD1, ORD2), each descriptor (D1PP1, D2PP1, D3PP1, D4PP1, D1PP2, D2PP2, D3PP2) including information relative to a function (PV1, PV2, PV3, PV4) intended to be activated by the corresponding pipeline on at least one frame of data of images, the functions associated with the various descriptors being different, and
control means (MC) configured to, for each pipeline (PP1, PP2), read the corresponding set of descriptors (D1PP1, D2PP1, D3PP1, D4PP1, D1PP2, D2PP2, D3PP2) in a sequential and cyclical manner according to said order (ORD1, ORD2) at the pace of one descriptor per at least one frame of data of images (F1, F2, F3, F4) and memorise the information corresponding to the descriptor read,
each pipeline (PP1, PP2) being configured to activate on each frame of data of images (F1, F2, F3, F4) the function (PV1, PV2, PV3, PV4) corresponding to the information memorised.

2. Device according to claim 1, wherein the control means (MC) include for each pipeline (PP1, PP2) a recopy memory (MR1, MR2) and a register (R1, R2), and are further configured to, for each pipeline (PP1, PP2),
read, between the end of the preceding frame of data of images (F2) and the end of the current frame of data of images (F3), one of the descriptors (D4PP1) and then memorise the corresponding information in the recopy memory (MR1), and
transfer the information memorised from the recopy memory (MR1) to the register (R1) as soon as the current frame of data of images (F3) ends,
the corresponding pipeline (PP1, PP2) being configured to activate the function corresponding to the information memorised in the register (R1) as soon as the next frame of data of images (F4) starts.

3. Device according to claim 1 or 2, wherein the control means (MC) comprise a controller of the Direct Memory Access type.

4. Device according to claim 3, wherein the controller of the Direct Memory Access type is an integrated controller dedicated to said at least one pipeline.

5. Device according to any one of the preceding claims, wherein the frame rate (DT) can be configured.

6. Device according to any one of the preceding claims, wherein the number of descriptors of each set of descriptors (D1PP1, D2PP1, D3PP1, D4PP1, D1PP2, D2PP2, D3PP2) and said order (ORD1, ORD2) can be configured.

7. Device according to any one of the preceding claims, further including processing means (10) based on one or more artificial neural networks coupled to said at least one pipeline (PP1, PP2).

8. Device according to any one of the preceding claims, further including a display controller (11) coupled to said at least one pipeline (PP1, PP2).

9. Electronic apparatus including an electronic device according to any one of the preceding claims, a camera (4) configured to deliver to said at least one pipeline (PP1, PP2) the frames of data of images (F1, F2, F3, F4).

10. Apparatus according to claims 8 and 9, further including display means (5) coupled to the display controller (11) of the electronic device (8).
